# EUROPÄISCHE PATENTSCHRIFT

(11) **EP 2 858 541 B1**
(45) Veröffentlichungstag und Bekanntmachung des Hinweises auf die Patenterteilung: **04.05.2016**
(21) Anmeldenummer: 13730137.0
(22) Anmeldetag: 30.05.2013
(51) Int. Cl.: A47J 36/24, A47J 36/02

(54) **BEHÄLTER FÜR SCHNELLE WARMVERPFLEGUNG UND ZUGEHÖRIGE HEIZSTATION**
CONTAINER FOR QUICK CATERING OF HOT ITEMS AND ACCOMPANYING HEATING STATION
RÉCIPIENT POUR LE RAVITAILLEMENT À CHAUD RAPIDE ET STATION DE CHAUFFAGE CORRESPONDANTE

(30) Priorität: 12.06.2012 EP 12171695
(43) Veröffentlichungstag der Anmeldung: 15.04.2015
(73) Patentinhaber: Heatis AG, 8952 Schlieren (CH)
(72) Erfinder: ANDRETTA Carlo, CH-8142 Uitikon-Waldegg (CH)
(74) Vertreter: Schmauder & Partner AG Patent- & Markenanwälte VSP
(86) Internationale Anmeldenummer: PCT/EP2013/061216
(87) Internationale Veröffentlichungsnummer: WO 2013/186060

(56) Entgegenhaltungen:
- FR-A1- 2 828 082
- FR-A1- 2 922 744
- US-A- 3 296 415

## Beschreibung

### Technisches Gebiet

Die Erfindung betrifft einen Behälter für schnelle Warmverpflegung gemäss Oberbegriff des Anspruchs 1 sowie eine zugehörige Heizstation.

### Stand der Technik

Es entspricht den Bedürfnissen der heutigen Arbeits- und Lebensweise, möglichst überall und jederzeit eine qualitativ hochwertige Warmverpflegung bereitstellen zu können. Dabei sind im vorliegenden Zusammenhang unter dem Begriff "Verpflegung" sowohl Nahrungsmittel wie auch Getränke zu verstehen. Dementsprechend umfasst "Warmverpflegung" verschiedenste warme Getränke wie Kaffee, Tee und Milchgetränke, aber auch warme flüssige Mahlzeiten wie insbesondere Suppen, sowie warme Festmahlzeiten wie Reis, Teigwaren, Hamburger und dergleichen. Das Attribut "schnell" ist im vorliegenden Zusammenhang so zu verstehen, dass die Bereitstellung einer Verpflegungsportion einschliesslich des Aufwärmens höchstens einige Minuten dauern soll.

Es gibt bereits verschiedenartige Behälter für schnelle Warmverpflegung, die wenigstens teilweise auch in der Patentliteratur beschrieben sind.

Beispielsweise wird im Patent US 3,296,415 eine Vorrichtung zum Aufheizen von Esswaren in kleinen Wegwerfbehältern beschrieben, wobei hierfür ein folienartiges elektrisches Heizelement in der Wand des jeweiligen Behälters vorgesehen ist.

Weiterhin beschreibt das Patent US 6,703,590 eine Vorrichtung zur elektrischen Aufheizung von Babynahrung in einem Behälter. Die Beheizung erfolgt über ein zylindrisches Heizelement, welches den Behälter umgibt, wobei ein guter mechanischer Kontakt zwischen Behälterwand und Heizzylinder erforderlich ist. Ein ähnliches Heizprinzip für Papierbecher ist in der Patentanmeldung US 2010/ 0089901 beschrieben.

Allerdings erfordern die bisherigen Lösungen jeweils eher komplizierte Ausgestaltungen des Heizgerätes und/oder des Behälters und sind deshalb für eine breit gefächerte kommerzielle Verwendung aus Praktikabilitäts- und Kostengründen kaum geeignet.

### Darstellung der Erfindung

Eine Aufgabe der Erfindung ist es demnach, einen verbesserten Behälter für schnelle Warmverpflegung bereit zu stellen. Insbesondere soll sich der Behälter durch einen vergleichsweise einfachen Aufbau auszeichnen und für eine Vielfalt unterschiedlicher Inhalte geeignet sein. Namentlich soll der erfindungsgemässe Behälter für aufheizbare Getränke wie auch für aufheizbare Nahrungsportionen aller Art verwendbar sein. Eine weitere Aufgabe der Erfindung besteht darin, eine Heizstation zur Beheizung des erfindungsgemässen Behälters bereit zu stellen.

Gelöst werden diese Aufgaben durch den im Anspruch 1 definierten Behälter beziehungsweise durch die im Anspruch 13 definierte Heizstation.

Der erfindungsgemässe Behälter für schnelle Warmverpflegung umfasst einen Bodenteil und einen darauf angeordneten Deckelteil, wobei die besagten Teile zusammen einen mediumdichten Hohlraum für eine aufzuheizende Verpflegungsportion bilden. Zumindest der Bodenteil ist aus einem thermoplastischen Kunststoff gebildet. Der Bodenteil weist ein in den Hohlraum ragendes primäres Wärmeübertragungselement auf, welches eine in den Bodenteil gesteckte und mit einer oberen Abschlusskalotte versehene Metallhülse umfasst, die mit dem Bodenteil mediumdicht verbunden ist.

Durch die erfindungsgemässen Massnahmen ergibt sich ein Behälter, der sich unter anderem durch einen einfachen und kostengünstigen Aufbau, eine hervorragende Wärmeübertragungscharakteristik, eine gute Handhabbarkeit sowie eine breite Einsetzbarkeit auszeichnet.

Grundsätzlich kann der erfindungsgemässe Behälter für einen mehrmaligen Gebrauch vorgesehen werden. In zahlreichen Anwendungsbereichen wird es jedoch erwünscht sein, den Behälter nach einmaligem Gebrauch zu entsorgen. Dies ist aufgrund der kostengünstigen und Herstellbarkeit und der Verwendung umweltverträglicher Materialien auf wirtschaftlich und ökologisch vertretbare Weise möglich.

Somit lassen sich mit dem erfindungsgemässen Behälter gut lagerfähige und ansprechende, für die verschiedensten Abnehmer konfektionierbare aufheizbare Verpflegungseinheiten bereitstellen. Diese umfassen jeweils einen entsprechend konfigurierten erfindungsgemässen Behälter sowie eine im Hohlraum des Behälters befindliche flüssige oder feste Verpflegungsportion. Der Bodenteil ist aus einem nahrungsmittelverträglichen Thermoplasten, beispielsweise aus Polypropylen, gebildet und wird vorzugsweise im Spritzgiessverfahren hergestellt.

In einer besonders für flüssige Inhalte geeigneten Ausführungsform ist der Bodenteil becherartig, vorzugsweise in Form eines nach oben leicht divergierenden Kegelstumpfes ausgebildet, an dessen Bodenfläche die als primäres Wärmeübertragungselement wirkende Metallhülse angeordnet ist. Bei dieser Ausführungsform ist der Deckelteil vorzugsweise als abreissbare Abschlussfolie, beispielsweise als Aluminium- oder Kunststofffolie am oberen Rand des becherartigen Bodenteils befestigt.

Vorteilhafte Ausgestaltungen der Erfindung sind nachfolgend beschrieben und in den abhängigen Ansprüchen definiert.

Unter dem Begriff "Metallhülse" ist im vorliegenden Zusammenhang eine metallwandige, im weitesten Sinne rohrartige Einstülpung zu verstehen, die jedoch weder auf zylindrische noch auf parallelwandige Formen beschränkt sein muss. Prinzipiell könnte es sich beispielsweise um eine konusförmige Einstülpung handeln, wobei dann der Spitzenbereich des Konus als Abschlusskalotte wirkt. Gemäss einer bevorzugten Ausführungsform ist die Metallhülse jedoch zylinderförmig und weist eine planare oder konvexe Abschlusskalotte auf.

Besonders vorteilhaft ist es, wenn das primäre Wärmeübertragungselement einstückig aus Aluminium gebildet ist (Anspruch 2). Aluminium zeichnet sich durch eine hervorragende Wärmeleitfähigkeit aus und ist zudem für Lebensmittelanwendungen bewährt. Prinzipiell könnte aber auch ein anderes nahrungsmittelverträgliches Metall verwendet werden.

Bei einer Ausgestaltung, die insbesondere für die Bereitstellung von flüssigen Nahrungsportionen geeignet ist, enthält der Deckelteil mindestens ein mediumdicht abgeschlossenes Kompartement für die getrennte Aufbewahrung einer Komponente der Warmverpflegung, wobei ein dem Hohlraum zugewandter Bereich des Kompartements von aussen her entfernbar ist, um die aufbewahrte Komponente in den Hohlraum zu bringen (Anspruch 3). Vorteilhafterweise handelt es sich hierbei um ein bis drei Kompartemente, beispielsweise um ein einzelnes Kompartement für Flüssigkonzentrat, um zwei Kompartemente für Suppenpulver bzw. Croutons, oder um drei Kompartemente für Kaffeepulver, Milchpulver und Süssmittel. Bei dieser Ausführungsform wird in aller Regel der Hohlraum des Behälters bereits herstellerseitig, d.h. bei der Befüllung des Behälters, mit Wasser befüllt. Anlässlich der Zubereitung der Nahrungsportion wird vorzugsweise zuerst das Wasser aufgeheizt, danach werden die Trennbereiche des Kompartements bzw. der gewünschten Kompartemente entfernt und danach die Inhalte zum heissen Wasser gegeben und vermischt. Vorteilhaft ist dabei, dass der Aufheizvorgang mit reinem Wasser erfolgt, wodurch eine unerwünschte lokale Überhitzung von Nahrungskomponenten im Kontakt mit dem primären Wärmeübertragungselement vermieden wird.

Bei einer Ausgestaltung, die insbesondere für die Bereitstellung von festen Nahrungsportionen geeignet ist, umfasst der Behälter zusätzlich ein im Wesentlichen parallel zur Metallhülse verlaufendes und von dieser beabstandetes sekundäres Wärmeübertragungselement, das zumindest in einem bodennahen Bereich über ein tertiäres Wärmeübertragungselement mit der Metallhülse thermisch verbunden ist (Anspruch 4). Dadurch ergibt sich eine erhöhte Wärmeübertragung von der Heizvorrichtung auf den Behälterinhalt. Vorteilhafterweise umfasst das sekundäre Wärmeübertragungselement zwei Wärmeleitplatten, die im Wesentlichen parallel zueinander angeordnet sind (Anspruch 5). Insbesondere kann es sich dabei um zwei Aluminiumplatten handeln. Bevorzugt ist es zudem, wenn das tertiäre Wärmeübertragungselement ebenfalls aus einem Metallblech gebildet ist, wobei wiederum Aluminium sehr vorteilhaft ist.

Bei einer weiteren Ausgestaltung unterteilen die besagten Wärmeleitplatten den Hohlraum des Behälters in drei mediumdicht voneinander abgetrennte Teilräume (Anspruch 6). Dies ist insbesondere für die Aufnahme gewisser Verpflegungsportionen vorgesehen, die aus drei unterschiedlichen Schichten gebildet sind. Beispiele solcher Verpflegungsportionen sind Hamburger, Sandwiches und sandwichartige Erzeugnisse wie sie unter den Bezeichnungen "Toast", "Focaccia ripiena", "Piadina" und dergleichen bekannt sind. Zweckmässig ist es dabei, wenn Randzonen der Wärmeleitplatten in entsprechenden Nuten des Boden- und Deckelteils aufgenommen sind (Anspruch 7). Damit wird gleichzeitig die erforderliche Mediumdichtigkeit und eine mechanische Stabilisierung des befüllten Behälters erreicht. Zweckmässigerweise sind die Nuten mit einem dichtenden Wachs ausgefüllt.

In einer vorteilhaften Weiterbildung umfasst der Behälter einen zwischen dem Bodenteil und dem Deckelteil angeordneten Abstreiferteil, welcher mit einer Durchgangsöffnung für die Metallhülse sowie mit Durchgangsschlitzen für die Wärmeleitplatten ausgestattet ist (Anspruch 8). Damit lässt sich eine höchst unerwünschte Anhaftung von Nahrungsresten an den Wärmeleitplatten weitgehend vermeiden. In dieser Hinsicht ist es besonders bevorzugt, wenn zwischen Wärmeleitplatten und Bodenteil eine erste Steckverbindung mit einer ersten Lösekraft F1 besteht, wobei die erste Lösekraft F1 grösser ist als eine zwischen Wärmeleitplatten und Deckelteil bestehende zweite Lösekraft F2. Damit wird erreicht, dass beim Trennen von Deckelteil und Bodenteil die Wärmeplatten vom Deckelteil gelöst und am Bodenteil befestigt bleiben (Anspruch 9). Besonders vorteilhaft ist es zudem, wenn die Wärmeleitplatten mit Vorsprüngen versehen sind, welche einen Anschlag gegen die dem Deckelteil zugewandte Seite des Abstreiferteils bilden, und wobei zwischen Abstreiferteil und Deckelteil eine weitere Steckverbindung mit einer dritten Lösekraft F3 besteht, welche kleiner ist als die erste Lösekraft F1 (Anspruch 10). Als Folge hiervon bleiben die Wärmeleitplatten beim Trennen von Bodenteil und Deckelteil mit dem Bodenteil verbunden und vermögen aufgrund der besagten Vorsprünge den Abstreiferteil aus dem Deckelteil zu lösen, d.h. der Abstreiferteil wird von den Wärmeleitplatten des Bodenteils mitgenommen.

Es ist in höchstem Mass unerwünscht, dass die zur Aufheizung des Behälters vorgesehene Heizstation in unkontrollierter Weise betrieben wird. Ebenso unerwünscht ist ein versehentliches Trennen oder Abfallen des Behälters von der Heizstation während eines Heizvorgangs. Besonders vorteilhaft ist es deshalb, wenn die Heizleistung nur bei Anwesenheit und korrekter Positionierung eines zugehörigen Behälters abgegeben werden kann. Zur Gewährleistung einer sicheren und zweckgemässen Handhabung ist es deshalb vorteilhaft (Anspruch 11), wenn der Bodenteil aussenseitig ausgestattet ist mit:
i) mindestens einem Identifikationsmittel für ein entsprechendes Freigabemittel einer zugeordneten Heizstation; und/oder
ii) mindestens einem Befestigungsmittel zum Befestigen an ein entsprechendes Ankopplungsmittel einer zugeordneten Heizstation.

Die hierfür vorgesehenen Identifikations- und Freigabemittel können beispielsweise durch elektronische Elemente realisiert werden, also beispielsweise durch einen am Bodenteil angeordneten elektrischen Widerstand, dessen Wert durch eine Messeinheit an der Heizstation abgefragt wird. In einer bevorzugten mechanischen Ausführungsform ist das zumindest eine Identifikationsmittel und/oder das zumindest eine Befestigungsmittel als Rastvorsprung zur Einführung in eine entsprechend geformte, als Freigabemittel und/oder als Ankopplungsmittel wirkende Rastausnehmung ausgebildet oder vize versa (Anspruch 12). Beispielsweise kann als Rastvorsprung ein T-förmig ausgebildeter Zapfen vorgesehen werden, der mit einem Aufnahmeschlitz zusammenwirkt; letzterer umfasst vorteilhafterweise einen aufgeweiteten Einfahrabschnitt, der in einen schmaleren Fixierabschnitt übergeht.

Gemäss einem weiteren Aspekt wird eine Heizstation für einen erfindungsgemässen Behälter bereitgestellt (Anspruch 13). Diese umfasst einen Basisteil und eine zur Auflage des Bodenteils des Behälters ausgebildete Auflagefläche, sowie ein aus der Auflagefläche herausfahrbares stabförmiges Heizelement. Die Aussenabmessungen des Heizelements entsprechenden Innenabmessungen der Metallhülse des Behälters. Die erfindungsgemässe Heizstation umfasst zudem Heizsteuerungsmittel, um in einem ausgefahrenen Zustand des Heizelementes eine kontrollierte Beheizung der Metallhülse vorzunehmen. Vorteilhafterweise sind die Heizsteuermittel so programmiert, dass die Zeitdauer und allenfalls die Heizleistung entsprechend der aufzuheizenden Nahrungsportion optimiert sind.

Grundsätzlich kann die Heizstation mit einer nicht bewegbaren, d.h. gegenüber dem Basisteil starr angeordneten Auflagefläche ausgebildet sein. In einem solchen Fall wird in Betriebsstellung das stabförmige Heizelement von unten her aus der Auflagefläche nach oben vorgeschoben. Dies ergibt eine vergleichsweise einfache Konstruktion, hat jedoch den Nachteil einer vergleichsweise hohen Vorrichtung. Alternativ und in mancher Hinsicht vorteilhafter ist deshalb eine Variante, bei der das stabförmige Heizelement starr gegenüber dem Basisteil angeordnet ist und wobei die Auflagefläche in einer Axialrichtung der Heizstation von einer oberen Stellung in eine untere Stellung hin- und herschiebbar ist. Die obere Stellung der Auflagefläche definiert dabei den eingefahrenen Zustand des Heizelementes, während die untere Stellung der Auflagefläche den ausgefahrenen Zustand des Heizelementes definiert (Anspruch 14). Bei dieser Ausführungsform sind zudem Federmittel vorhanden, um die Auflagefläche in die obere Stellung vorzuspannen, wobei letztere der Grundstellung des Gerätes ohne aufgesetzten Behälter entspricht. Ausserdem sind Haltemittel vorhanden, um bei Bedarf, d.h. bei aufgesetztem Behälter, die Auflagefläche in der unteren Stellung mit ausgefahrenem stabförmigem Heizelement zu halten.

Eine vergleichsweise kompakte Bauweise lässt sich realisieren, indem die Auflagefläche auf einer teleskopartigen Hülse angeordnet wird.

Gemäss einer besonders bevorzugten Ausführungsform der Heizstation wirkt das Heizsteuerungsmittel mit einem der weiter oben erwähnten Freigabemittel zusammen, welches ausschliesslich bei Anwesenheit eines zugeordneten Identifikationsmittels eines Behälters einen Aufheizvorgang freigibt (Anspruch 15).

### Wege zur Ausführung der Erfindung

Ausführungsbeispiele der Erfindung werden nachfolgend anhand der Zeichnungen näher beschrieben, dabei zeigen:
- Fig. 1: eine erste Ausführungsform eines Behälters, insbesondere für Getränke, im Längsschnitt;
- Fig. 2: den Getränkebehälter der Fig. 1, in einer Ansicht von unten;
- Fig. 3: einen Ausschnitt des Getränkebehälters der Fig. 1 in vergrösserter Darstellung, zur Veranschaulichung des primären Wärmeübertragungselementes;
- Fig. 4: den Getränkebehälter der Fig. 1 auf einer ersten Ausführungsform einer Heizstation, mit eingefahrenem Heizelement, im Längsschnitt;
- Fig. 5: den Getränkebehälter und die Heizstation der Fig. 4, mit ausgefahrenem Heizelement, wiederum im Längsschnitt;
- Fig. 6: den Getränkebehälter der Fig. 1, auf einer weiteren Ausführungsform einer Heizstation, mit eingefahrenem Heizelement, im Längsschnitt;
- Fig. 7: den Getränkebehälter und die Heizstation der Fig. 6, mit ausgefahrenem Heizelement, wiederum im Längsschnitt;

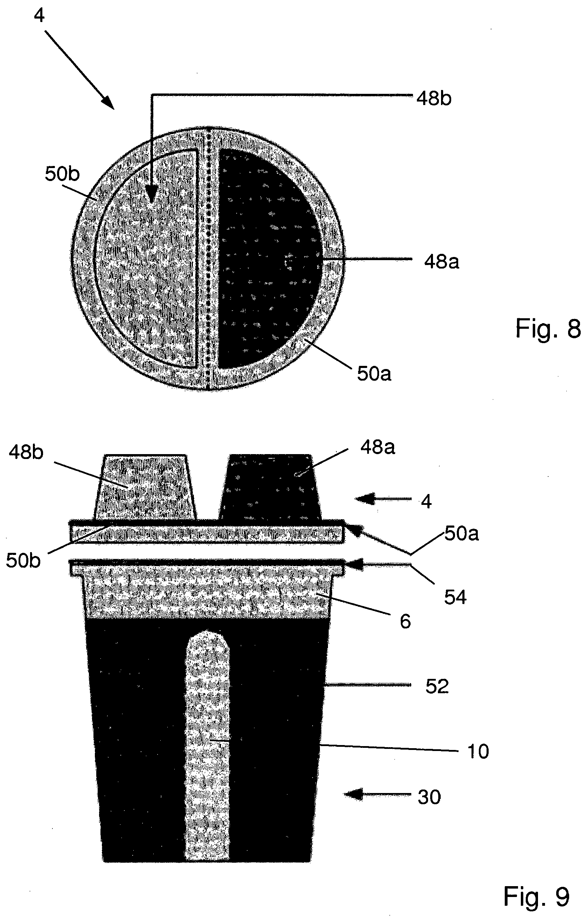

- Fig. 8: eine weitere Ausführungsform eines Getränkebehälters, in Draufsicht;
- Fig. 9: den Getränkebehälter der Fig. 8, im Längsschnitt;
- Fig. 10: eine weitere Ausführungsform eines Behälters, insbesondere für feste Nahrungsportionen, in einer schematischen Darstellung, im Längsschnitt;
- Fig. 11 - 18: den Ablauf der Befüllung, Beheizung und Entnahme des Inhalts des Nahrungsportionenbehälters der Fig. 10, in einer schematischen Darstellung, im Längsschnitt; und
- Fig. 19: einen Nahrungsportionenbehälter gemäss dem Prinzip der Fig. 10, in einer perspektivischen Darstellung, mit einem darin befindlichen Hamburger.

Im Folgenden werden funktionsäquivalente Komponenten in den verschiedenen Figuren und Ausführungsbeispielen mit ein- und demselben Bezugszeichen versehen.

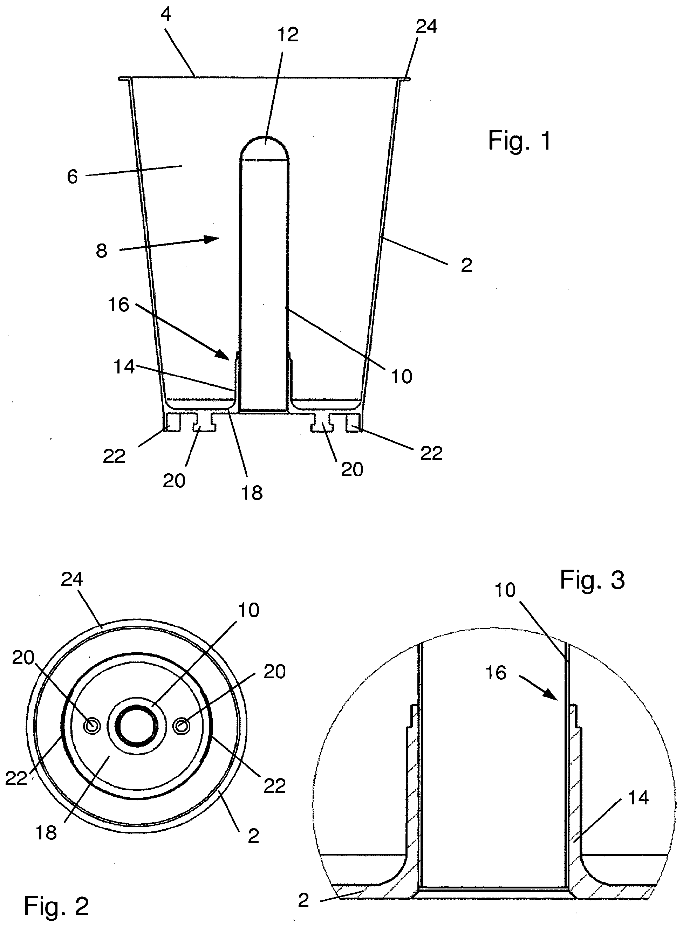

Der in den Fig. 1 bis 3 dargestellte Behälter für schnelle Warmverpflegung umfasst einen Bodenteil 2 und einen darauf angeordneten Deckelteil 4, wobei die besagten Teile zusammen einen mediumdichten Hohlraum 6 für eine aufzuheizende Verpflegungsportion bilden. Der Bodenteil ist aus einem thermoplastischen Kunststoff, beispielsweise aus Polypropylen, gebildet und weist zudem ein in den Hohlraum ragendes primäres Wärmeübertragungselement 8 auf. Dieses umfasst eine in den Bodenteil gesteckte Metallhülse 10, die mit dem Bodenteil mediumdicht verbunden und mit einer oberen Abschlusskalotte 12 versehen ist. Wie insbesondere aus der Fig. 3 ersichtlich, ist die Metallhülse 10 im unteren Bereich von einem in den Hohlraum ragenden Abschnitt 14 des Bodenteils 2 umgeben, wobei zwischen diesen Teilen ein umlaufender mediumdichter Abschluss 16 ausgebildet ist. Im gezeigten Beispiel sind die obere Abschlusskalotte 12 und die Metallhülse 10 einstückig aus Aluminium gebildet.

Da der Behälter zum Aufsetzen auf eine zugeordnete Heizstation vorgesehen ist, ist der Bodenteil 2 zweckmässigerweise mit einer im Wesentlichen planaren Bodenfläche 18 ausgestattet. Diese Bodenfläche ist im vorliegenden Beispiel mit zwei nach unten vorstehenden T-förmig ausgebildeten Zapfen 20 versehen. Diese Rastvorsprünge sind zur Zusammenwirkung mit entsprechenden Rastausnehmungen einer zugehörigen Heizstation vorgesehen und können als Identifikationsmittel und oder als Befestigungsmittel verwendet werden. Weiterhin ist die Bodenfläche im gezeigten Beispiel mit zwei nach unten vorstehenden, kreissegmentförmigen Wandabschnitten 22 ausgestattet, die zum Einfahren in zugehörige Führungsschlitze einer Heizstation vorgesehen sind und dadurch als zusätzliche mechanische Stabilisierung dienen.

Der Deckelteil 4 wird durch eine dünne Abschlussfolie gebildet. Vorzugsweise ist diese aus einer Aluminiumfolie gebildet, die auf der zum Deckelteil zugewandten Seite mit einer Thermoplastschicht versehen ist. Zweckmässigerweise handelt es sich dabei um das Thermoplastmaterial, aus dem der Bodenteil 2 gebildet ist, beispielsweise Polypropylen oder Polyethylen. Zur Bildung eines mediumdichten aber einfach aufreissbaren oberen Abschlusses ist die besagte Abschlussfolie auf eine zugeordneten Stirnlippe 24 am oberen Rand des Bodenteils 2 angeschweisst oder angeklebt.

Zur Herstellung des Bodenteils wird im vorliegenden Beispiel zunächst die Metallhülse 10 durch Fliesspressen von Aluminium hergestellt. Diese Hülse wird in ein Spritzgiesswerkzeug eingelegt, woraufhin der becherartige Bodenteil 2 durch Spritzgiessen mit einem Thermoplasten wie Polypropylen oder Polyethylen hergestellt und dabei der untere Teil der Hülse umspritzt wird. Somit wird der in den Hohlraum ragende Abschnitt 14 des Bodenteils 2 geformt, welcher mit der Mantelfläche der Hülse einen umlaufenden mediumdichten Abschluss 16 bildet.

Die Abmessungen des Behälters lassen sich entsprechend dem Verwendungszweck über einen erheblichen Bereich variieren. Lediglich im Sinne eines Beispiels sind nachfolgend einige Dimensionierungen für einen Behälter für eine aufheizbare flüssige Verpflegungsportion angegeben:

| | |
|---|---|
| - Gesamthöhe | ca. 100 mm |
| - Durchmesser Bodenfläche | ca. 55 mm |
| - Durchmesser Deckelteil | ca. 80 mm |
| - Wandstärke Deckelteil | ca. 0.8 mm |
| - Durchmesser Metallhülse | ca. 12.5 mm |
| - Länge Metallhülse | ca. 70 mm |
| - Wandstärke Metallhülse | ca. 0.3 mm |
| - Wandstärke Wärmeleitplatten | ca. 0.3 mm |
| - Höhe T-förmige Zapfen | ca. 5 mm |
| - Durchmesser Zapfenbasis | ca. 4 mm |
| - Durchmesser Zapfendach | ca. 6 mm |

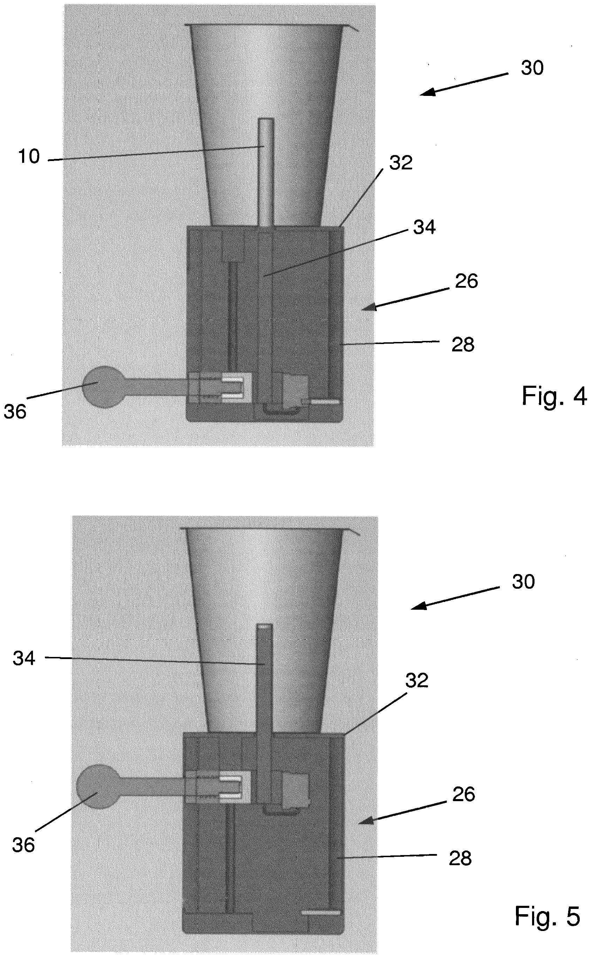

Die Fig. 4 und 5 zeigen eine erste Ausführungsform einer Heizstation 26. Diese umfasst einen Basisteil 28 und eine zur Auflage des Bodenteils eines auf der Heizstation befindlichen Behälters 30 ausgebildete Auflagefläche 32, sowie ein aus der Auflagefläche herausfahrbares zylinderförmiges Heizelement 34. Im gezeigten Beispiel ist das Heizelement mittels eines griffartigen Bedienungselementes 36 von einer unteren, eingefahrenen Position (Fig. 4) in eine obere, ausgefahrene Position (Fig. 5) und vize versa verschiebbar. Vorteilhafterweise ist das Heizelement 34 mittels einer hier nicht dargestellten Feder in die untere, eingefahrene Position vorgespannt. Um das Heizelement in der oberen, ausgefahrenen Position zu halten, kann das Bedienungselement 36 in eine hierfür vorgesehene Rastausnehmung des Basisteils eingerastet werden.

Die Aussenabmessungen des Heizelementes 34, d.h. dessen Aussendurchmesser sowie dessen über die Auflagefläche 32 vorstehende Länge im ausgefahrenen Zustand entsprechen bis auf eine konstruktionsbedingte Toleranz den korrespondierenden Innenabmessungen der Metallhülse 10. Damit wird eine möglichst gute Wärmeübertragung vom Heizelement auf die Metallhülse ermöglicht. Es versteht sich, dass die vorstehende Länge des Heizelementes 34 grundsätzlich auch etwas kürzer als die entsprechende Länge der Metallhülse sein kann, wobei dies jedoch eine unerwünschte Verringerung der Wärmeübertragung zur Folge hat.

Die Heizstation 26 umfasst zudem eine hier nicht dargestellte Stromversorgung mit entsprechenden Heizsteuerungsmitteln, um in einem ausgefahrenen Zustand des Heizelementes 34 eine kontrollierte Beheizung der Metallhülse 10 vorzunehmen. Die Stromversorgung wird zweckmässigerweise mit einer 12 V Stromquelle (Einsatz im Auto und allenfalls Flugzeug) oder mit einer 110 V bzw. 220 V Stromquelle (Einsatz im Büro, zu Hause, im Zug) versorgt. Zweckmässigerweise sind die Heizsteuermittel so programmiert, dass die Zeitdauer und allenfalls die Heizleistung entsprechend der aufzuheizenden Nahrungsportion optimiert und auswählbar sind. Mit einer elektrischen Heizleistung von 120 W kann eine Getränkeportion von ca. 180 g ausgehend von ca. 18°C innerhalb von ca. 2 Min 20 Sek auf 45°C erhitzt werden.

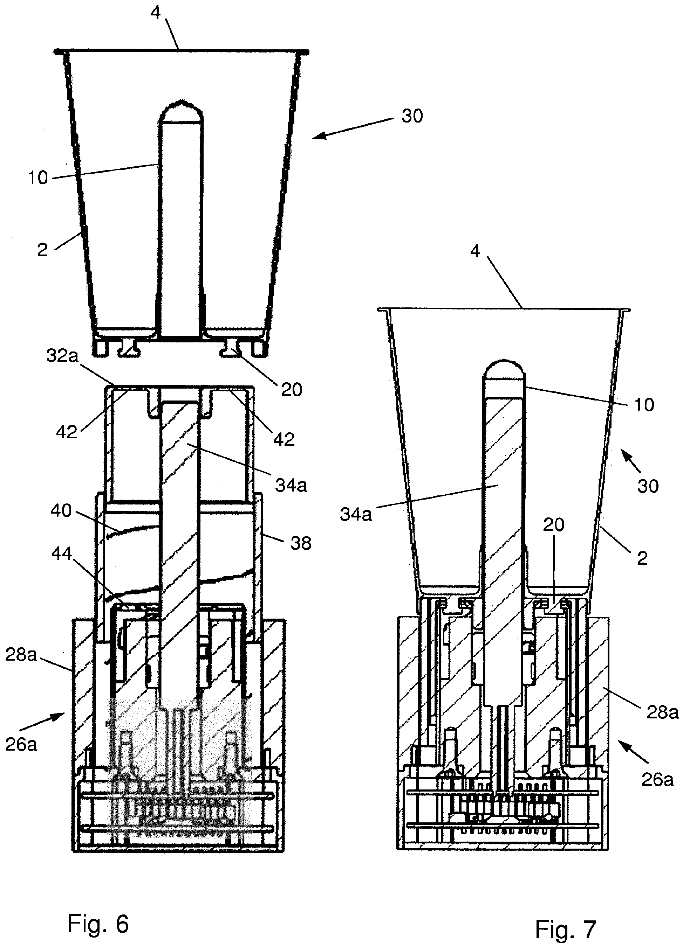

Die Fig. 6 und 7 zeigen eine weitere Heizstation 26a, bei der das stabförmige Heizelement 34a starr gegenüber dem Basisteil 28a angeordnet ist und wobei die Auflagefläche 32a in einer Axialrichtung der Heizstation von einer oberen Stellung (Fig. 6) in eine untere Stellung (Fig. 7) hin- und herschiebbar ist. Die obere Stellung der Auflagefläche definiert dabei den eingefahrenen Zustand des Heizelementes, während die untere Stellung der Auflagefläche den ausgefahrenen Zustand des Heizelementes definiert. Im gezeigten Beispiel bildet die Auflagefläche 32a den oberen Abschluss einer dreiteiligen teleskopartigen Hülse 38. Diese umfasst Federmittel 40, um die Auflagefläche 32a in die obere Stellung vorzuspannen, wobei letztere der Grundstellung des Gerätes ohne aufgesetzten Behälter entspricht. Wie aus der Fig. 6 erkennbar, ist die Auflagefläche 32a mit zwei Ausnehmungen 42 ausgestattet, welche einen Durchgang für die nach unten vorstehenden T-förmigen Zapfen 20 des Behälters 30.

Zum Auslösen eines Beheizungsvorgangs wird der Behälter 30 auf die Auflagefläche 32a gesetzt, wobei die nach unten vorstehenden, kreissegmentförmigen Wandabschnitte 22 als Ausrichtungshilfe dienen. Danach wird der Behälter nach unten gedrückt, sodass die teleskopartige Hülse zusammengefahren und verkürzt wird. Dabei gelangen die T-förmigen Zapfen 20 des Behälters 30 in zugehörige Aufnahmeöffnungen 44, die an der Oberseite des fest mit dem Basisteil 28a verbundenen untersten Hülsenteils 46 angeordnet sind. Durch eine Drehbewegung um die Längsachse der Anordnung gelangen die Zapfen 20 in einen verjüngten Haltebereich der Aufnahmeöffnungen 44. Damit wird die Auflagefläche 32a in ihrer unteren Stellung mit ausgefahrenem stabförmigem Heizelement 34 arretiert.

Zweckmässigerweise wird das Erreichen der oben beschriebenen arretierten Position zur Auslösung eines Heizvorgangs verwendet. Dementsprechend wirken die Zapfen 20 des Behälters 30 gleichzeitig auch als Identifikationsmittel für die Anwesenheit des Behälters, und die mit entsprechenden Sensormitteln versehenen Aufnahmeöffnungen 44 wirken als Freigabemittel zur Auslösung des Heizvorgangs.

Bei einer Ausgestaltung, die insbesondere für die Bereitstellung von flüssigen Nahrungsportionen geeignet ist, enthält der Deckelteil 4 zwei mediumdicht abgeschlossene Kompartemente 48a und 48b für die getrennte Aufbewahrung je einer Komponente der Warmverpflegung. Beispielsweise kann es sich dabei um Suppenpulver bzw. Croutons für eine Fertigsuppe handeln. An der dem Hohlraum 6 zugewandten Seite des Kompartements bildet ein Foliensegment 50a bzw. 50b einen entfernbaren unteren Abschlussbereich, um die aufbewahrte Komponente in den Hohlraum zu bringen.

Bei dieser Ausführungsform wird der Hohlraum des Behälters 30 bereits herstellerseitig, d.h. bei der Befüllung des Behälters, mit Wasser 52 befüllt. Vorteilhafterweise ist der Behälter zudem mit einer ebenfalls von aussen entfernbaren oberen Abschlussfolie 54 versehen, die eine zusätzliche Absicherung gegen ein unerwünschtes vorzeitiges Vermischen von Wasser und Verpflegungskomponenten verhindert.

Grundsätzlich könnten die mit befüllten Kompartementen versehenen Deckelteile und die mit einer oberen Abschlussfolie versehenen, wassergefüllten Behälter getrennt gelagert und/oder verkauft werden.

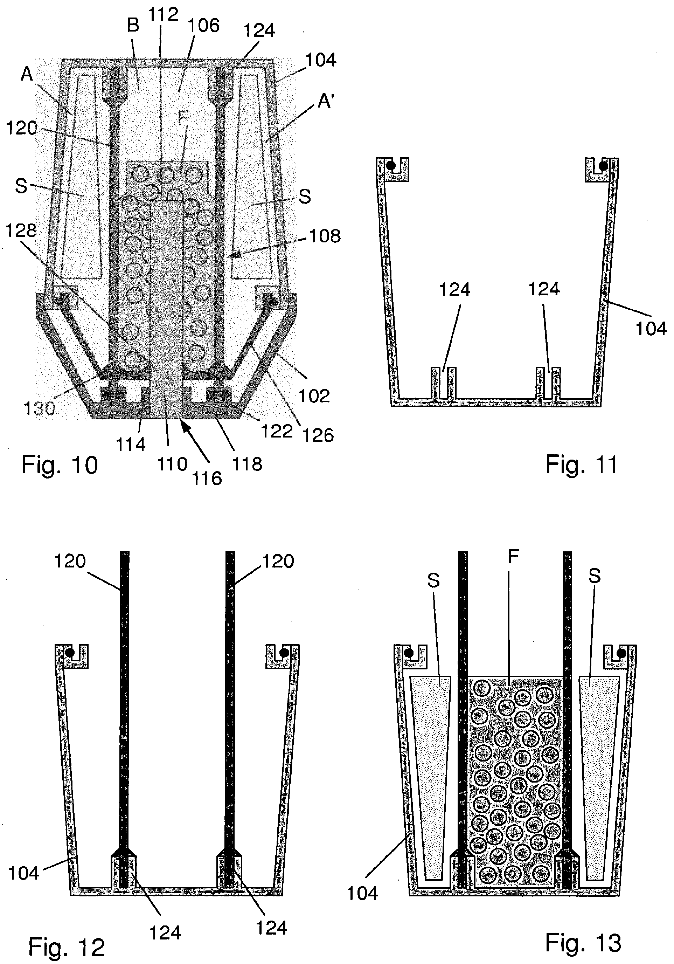

Die Fig. 10 bis 19 zeigen den Aufbau und die Funktionsweise eines weiteren Behälters, der insbesondere für feste Nahrungsportionen geeignet ist. Aus Konsistenzgründen wird wie bei den übrigen Ausführungsformen derjenige Teil, der mit der als primäres Wärmeübertragungselement wirkenden Metallhülse ausgestattet ist, stets als "Bodenteil" bezeichnet, auch wenn dieser eher an einen Deckelteil erinnern mag. Ebenso wird das Gegenstück ohne Metallhülse stets als "Deckelteil" bezeichnet, auch wenn es eher an einen Bodenteil oder allenfalls an einen Hauptbehälter erinnern mag.

Der in Fig. 10 dargestellte Behälter umfasst einen Bodenteil 102 und einen darauf angeordneten Deckelteil 104, wobei die besagten Teile zusammen einen mediumdichten Hohlraum 106 für eine aufzuheizende feste Verpflegungsportion bilden. Der aus einem thermoplastischen Kunststoff gebildete Bodenteil weist ein in den Hohlraum ragendes primäres Wärmeübertragungselement 108 auf. Dieses umfasst eine in den Bodenteil gesteckte Metallhülse 110, die mit dem Bodenteil mediumdicht verbunden und mit einer oberen Abschlusskalotte 112 versehen ist. Die Metallhülse 110 ist im unteren Bereich von einem in den Hohlraum ragenden Abschnitt 114 des Bodenteils 102 umgeben, wobei zwischen diesen Teilen ein umlaufender mediumdichter Abschluss 116 ausgebildet ist. Im gezeigten Beispiel sind die obere Abschlusskalotte 112 und die Metallhülse 110 einstückig aus Aluminium gebildet. Da der Behälter zum Aufsetzen auf eine zugeordnete Heizstation vorgesehen ist, ist der Bodenteil mit einer im Wesentlichen planaren Bodenfläche 118 ausgestattet.

Der Deckelteil 104 wird durch ein becherförmiges Element gebildet, das zur Bildung eines mediumdichten aber einfach auftrennbaren oberen Abschlusses in den oberen Rand des Bodenteils 102 gesteckt ist. Vorteilhafterweise ist dieser Abschluss in an sich bekannter Weise als Schnappverbindung ausgestaltet, welche aussenseitig mit einer Wachsschicht und/oder einem Dichtungsband überdeckt ist. Letzteres wirkt auch als Originalitätssicherung gegenüber unbefugtem Wiederbefüllen des Behälters.

Des Weiteren umfasst der Behälter der Fig. 10 ein im Wesentlichen parallel zur Metallhülse 110 verlaufendes und von dieser beabstandetes sekundäres Wärmeübertragungselement in Form zweier im Wesentlichen parallel zueinander angeordneter Wärmeleitplatten 120 aus Aluminium, die in einem bodennahen Bereich über ein hier nicht dargestelltes tertiäres Wärmeübertragungselement mit der Metallhülse thermisch verbunden sind. Vorzugsweise ist das tertiäre Wärmeübertragungselement aus einem Aluminiumblech gebildet und umschliesst einen bodennahen Bereich der Metallhülse 110.

Die beiden Wärmeleitplatten 120 unterteilen den Hohlraum des Behälters in drei voneinander abgetrennte Teilräume A, B und A'. Wie in der Fig. 10 schematisch angedeutet, enthalten die beiden äusseren Teilräume A und A' je eine Brotscheibe S während der innere Teilraum B eine Sandwichfüllung F enthält.

Zur Bildung einer mediumdichten oder annähernd mediumdichten Trennung der besagten Teilräume sind Randzonen der Wärmeleitplatten in entsprechenden Nuten 122 bzw. 124 des Bodenteils bzw. Deckelteils aufgenommen. Damit wird gleichzeitig auch eine mechanische Stabilisierung des befüllten Behälters erreicht. Vorteilhafterweise sind diese Nuten anfänglich mit einem nahrungsmittelkonformen Wachsmaterial ausgefüllt, das beim Einsetzen der Wärmeleitplatten leicht erwärmt und damit fliessfähig wird. Dies erlaubt es, vergleichsweise dünne Wärmeleitplatten, beispielsweise mit einer Wandstärke von 0.3 mm, zu verwenden, ohne dass beim Einsetzvorgang eine unerwünschte Verformung stattfindet.

Wie nachfolgend noch näher erläutert wird, umfasst der Behälter zudem einen zwischen dem Bodenteil und dem Deckelteil angeordneten Abstreiferteil 126, der mit einer Durchgangsöffnung 128 für die Metallhülse sowie mit Durchgangsschlitzen 130 für die Wärmeleitplatten ausgestattet ist.

Der Zusammenbau und die Befüllung des Behälters wird nun anhand der Fig. 11 bis 15 erklärt.

Gemäss der Fig. 11 wird zunächst der Deckelteil 104 kopfüber, d.h. mit nach oben weisender Öffnung bereitgestellt.

Danach werden gemäss der Fig. 12 die beiden Wärmeleitplatten 120 in die Nuten 124 des Deckelteils eingesteckt. Dabei sind die Komponenten dahingehend ausgebildet, dass eine Steckverbindung mit einer zweiten Lösekraft F2 gebildet wird.

Anschliessend wird gemäss der Fig. 13 eine Befüllung des Deckelteils vorgenommen.

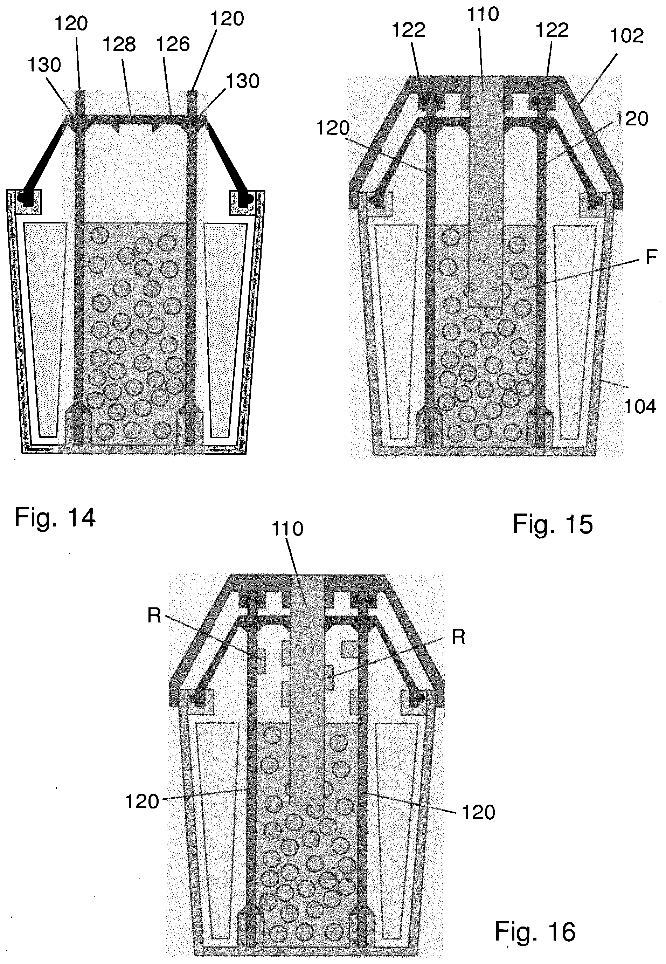

In der Folge wird gemäss der Fig. 14 der Abstreiferteil 126 auf den Deckelteil gesteckt, wobei die Durchgangsschlitze 130 des Abstreiferteils 126 die oberen Ränder der beiden Wärmeleitplatten 120 aufnehmen.

Schliesslich wird gemäss der Fig. 15 der Bodenteil 102 auf den ausgerüsteten Deckelteil 104 gesteckt. Dabei dringt die Metallhülse 110 in die Sandwichfüllung F ein. Gleichzeitig wird zwischen den Nuten 122 des Bodenteils und den Wärmeleitplatten 120 eine Steckverbindung mit einer ersten Lösekraft F1 gebildet. Ausserdem wird zwischen den Randzonen des Deckelteils 104 und des Bodenteils 102 eine lösbare mediumdichte Verbindung gebildet. Das so erhaltene Gebilde wird spätestens vor dem Aufheizvorgang derart gedreht, dass der Bodenteil 102 nach unten zu liegen kommt. Damit ist die in der Fig. 10 gezeigte Situation erreicht. Hiermit kann nun ein Aufheizvorgang wie weiter oben beschrieben durchgeführt werden.

Die Entnahme des Behälterinhaltes nach erfolgtem Aufheizvorgang wird nun anhand der Fig. 16 bis 18 erklärt. Wesentlich ist dabei, dass die erste Lösekraft F1 grösser ist als die zweite Lösekraft F2.

Zunächst wird wieder eine Drehung derart vorgenommen, dass der Deckelteil wieder nach unten zu liegen kommt. Damit ergibt sich die in der Fig. 16 dargestellten Situation, welche im Wesentlichen derjenigen der Fig. 15 entspricht mit dem Unterschied, dass nun die im Behälter befindliche Verpflegungsportion aufgeheizt ist. Ausserdem kleben nun in manchen Fällen einige Reste R der Verpflegungsportion an der Metallhülse 110 und/oder an den Wärmeleitplatten 120.

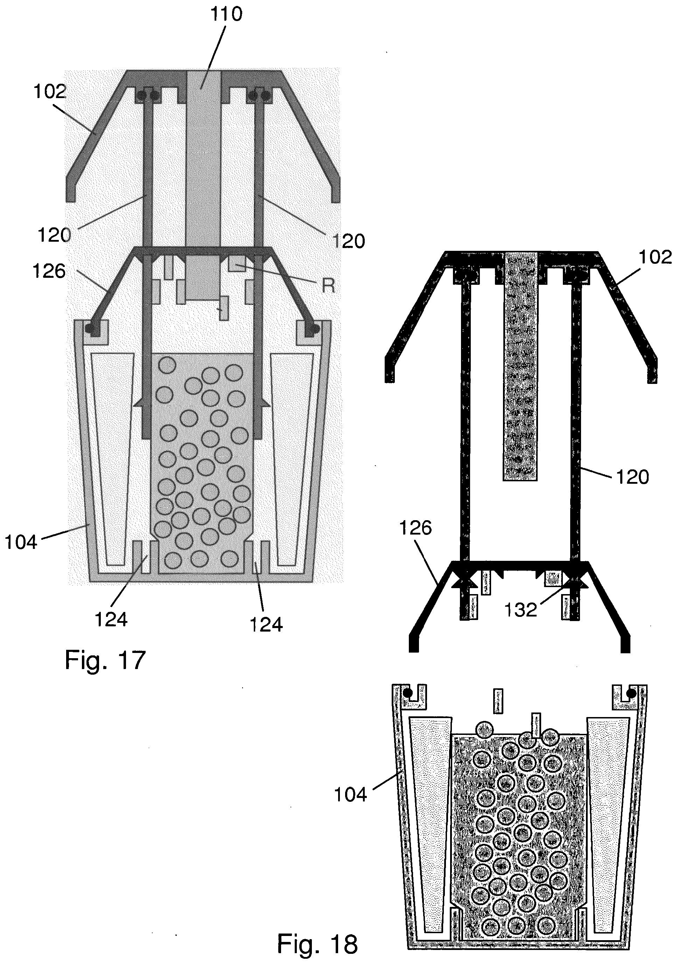

Danach wird entsprechend der Fig. 17 der Bodenteil 102 mitsamt Metallhülse 110 gegenüber dem Deckelteil 104 nach oben gezogen, wobei die mediumdichte Verbindung zwischen Bodenteil und Deckelteil aufgetrennt wird. Dabei verbleiben die beiden Wärmeleitplatten 120 aufgrund der grösseren Lösekraft F1 am Bodenteil 102 und werden aus den Nuten 124 des Deckelteils 104 gelöst. Bei diesem Vorgang werden die an der Metallhülse 110 und/oder an den Wärmeleitplatten 120 klebenden Reste R vom Abstreiferteil 126 zurückgehalten.

Wie insbesondere aus der Fig. 18 hervorgeht, sind die Wärmeleitplatten 120 mit Vorsprüngen 132 versehen, welche einen Anschlag gegen die dem Deckelteil zugewandte Seite des Abstreiferteils 126 bilden. Zwischen dem Abstreiferteil 126 und dem Deckelteil 104 besteht eine Steckverbindung mit einer dritten Lösekraft F3, welche kleiner ist als die erste Lösekraft F1. Als Folge hiervon bleiben die Wärmeleitplatten 120 beim Trennen von Bodenteil 102 und Deckelteil 104 mit dem Bodenteil 102 verbunden und vermögen aufgrund der besagten Vorsprünge 132 den Abstreiferteil 126 aus dem Deckelteil 104 zu lösen, d.h. der Abstreiferteil wird von den Wärmeleitplatten des Bodenteils mitgenommen.

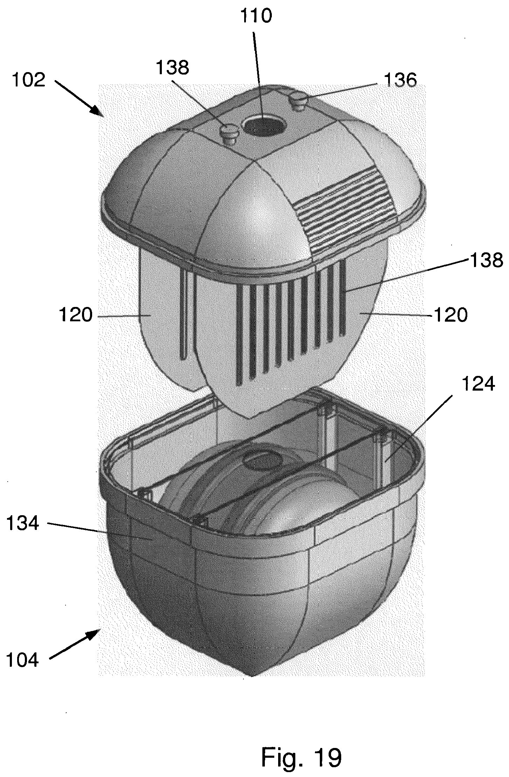

Wie insbesondere die Fig. 19 zeigt, sind die am Deckelteil 104 angeordneten Nuten 124 nicht nur im Stirnbereich des Deckelteils, sondern auch im Mantelflächenbereich 134 ausgebildet. Analoges gilt für den Bodenteil 102. Weiterhin zeigt die Fig. 19, dass am Bodenteil 102 analog wie im Falle des früher beschriebenen Getränkebehälters T-förmig ausgebildete Zapfen 136 ausgebildet sind, die als Identifikationsmittel und/oder als Befestigungsmittel wirken. Schliesslich zeigt die Fig. 19, dass die Wärmeleitplatten 120 vorteilhafterweise mit einer Mehrzahl von Längsrippen 138 ausgestattet sind, welche eine mechanische Stabilisierung der Wärmeleitplatten bilden.

## Patentansprüche

1. Behälter für schnelle Warmverpflegung, mit einem Bodenteil (2; 102) und einem darauf angeordneten Deckelteil (4; 104), wobei die besagten Teile zusammen einen mediumdichten Hohlraum (6; 106) für eine aufzuheizende Verpflegungsportion bilden, und wobei zumindest der Bodenteil aus einem thermoplastischen Kunststoff gebildet ist, **dadurch gekennzeichnet, dass** der Bodenteil ein in den Hohlraum ragendes primäres Wärmeübertragungselement (8; 108) aufweist, welches eine in den Bodenteil gesteckte und mit einer oberen Abschlusskalotte versehene Metallhülse (10; 110) umfasst, die mit dem Bodenteil mediumdicht verbunden ist.

2. Behälter nach Anspruch 1, wobei das primäre Wärmeübertragungselement einstückig aus Aluminium gebildet ist.

3. Behälter nach Anspruch 1 oder 2, wobei der Deckelteil (4) mindestens ein mediumdicht abgeschlossenes Kompartement (48a, 48b) für die getrennte Aufbewahrung einer Komponente der Warmverpflegung enthält, wobei ein dem Hohlraum zugewandter Bereich (50a, 50b) des Kompartements von aussen her entfernbar ist, um die aufbewahrte Komponente in den Hohlraum zu bringen.

4. Behälter nach Anspruch 1 oder 2, weiterhin umfassend ein im Wesentlichen parallel zur Metallhülse (110) verlaufendes und von dieser beabstandetes sekundäres Wärmeübertragungselement (120), das zumindest in einem bodennahen Bereich über ein tertiäres Wärmeübertragungselement mit der Metallhülse thermisch verbunden ist.

5. Behälter nach Anspruch 4, wobei das sekundäre Wärmeübertragungselement zwei vorzugsweise aus einem Metallblech gebildete Wärmeleitplatten (120) umfasst, die im Wesentlichen parallel zueinander angeordnet sind.

6. Behälter nach Anspruch 5, wobei die besagten Wärmeleitplatten den Hohlraum des Behälters in drei mediumdicht voneinander abgetrennte Teilräume (A, B, A') untereilen.

7. Behälter nach Anspruch 6, wobei Randzonen der Wärmeleitplatten (120) in entsprechenden Nuten (122, 124) des Boden- und Deckelteils aufgenommen sind.

8. Behälter nach Anspruch 7, weiterhin umfassend einen zwischen dem Bodenteil und dem Deckelteil angeordneten Abstreiferteil (126), welcher mit einer Durchgangsöffnung (128) für die Metallhülse (110) sowie mit Durchgangsschlitzen (130) für die Wärmeleitplatten (120) ausgestattet ist.

9. Behälter nach Anspruch 8, wobei zwischen Wärmeleitplatten (120) und Bodenteil (102) eine erste Steckverbindung mit einer ersten Lösekraft F1 besteht, wobei die erste Lösekraft F1 grösser ist als eine zwischen Wärmeleitplatten (120) und Deckelteil (104) bestehende zweite Lösekraft F2.

10. Behälter nach Anspruch 9, wobei die Wärmeleitplatten (120) mit Vorsprüngen (132) versehen sind, welche einen Anschlag gegen die dem Deckelteil zugewandte Seite des Abstreiferteils (126) bilden, und wobei zwischen Abstreiferteil (126) und Deckelteil (104) eine weitere Steckverbindung mit einer dritten Lösekraft F3 besteht, welche kleiner ist als die erste Lösekraft F1.

11. Behälter nach einem der Ansprüche 1 bis 10, wobei der Bodenteil aussenseitig ausgestattet ist mit:
i) mindestens einem Identifikationsmittel (20; 136) für ein entsprechendes Freigabemittel (44) einer zugeordneten Heizstation; und/oder
ii) mindestens einem Befestigungsmittel (20, 22; 136) zum Befestigen an ein entsprechendes Ankopplungsmittel (44, 32) einer zugeordneten Heizstation (26; 26a).

12. Behälter nach Anspruch 11, wobei das Identifikationsmittel und/oder das Befestigungsmittel als Rastvorsprung (20; 136) zur Einführung in eine entsprechend geformte, als Freigabemittel und/oder als Ankopplungsmittel wirkende Rastausnehmung (44) ausgebildet ist oder vize versa.

13. Heizstation für einen Behälter nach einem der Ansprüche 1 bis 12, mit einem Basisteil (28) und einer zur Auflage des Bodenteils des Behälters (30) ausgebildeten Auflagefläche (32), sowie mit einem aus der Auflagefläche herausfahrbaren stabförmigen Heizelement (34), dessen Aussenabmessungen den Innenabmessungen der Metallhülse (10) des Behälters entsprechen, wobei die Heizstation weiterhin Heizsteuerungsmittel umfasst, um in einem ausgefahrenen Zustand des Heizelementes eine kontrollierte Beheizung der Metallhülse vorzunehmen.

14. Heizstation nach Anspruch 13, wobei das stabförmige Heizelement (34a) starr gegenüber dem Basisteil (28a) angeordnet ist und wobei die Auflagefläche (32a) in einer Axialrichtung der Heizstation von einer oberen Stellung in eine untere Stellung hin- und herschiebbar ist, wobei die obere Stellung der Auflagefläche den eingefahrenen Zustand des Heizelementes definiert und die untere Stellung der Auflagefläche den ausgefahrenen Zustand des Heizelementes definiert, wobei Federmittel (40) vorhanden sind, um die Auflagefläche in die obere Stellung vorzuspannen, und wobei Haltemittel (20, 44) vorhanden sind, um die Auflagefläche in der unteren Stellung zu halten.

15. Heizstation nach Anspruch 13 oder 14 für einen Behälter nach Anspruch 11, wobei das Heizsteuerungsmittel mit einem Freigabemittel (44) zusammenwirkt, welches ausschliesslich bei Anwesenheit eines zugeordneten Identifikationsmittels (20) eines Behälters einen Aufheizvorgang freigibt.

## Claims

1. A container for rapid hot-food catering comprising a base part (2; 102) and a cover part (4; 104) disposed thereon, wherein the said parts together form a medium-tight chamber (6; 106) for a meal portion to be heated, and wherein at least the base part is made of a thermoplastic resin, **characterized in that** the base part comprises a primary heat transfer element (8; 108) protruding into the chamber and comprising a metal sleeve (10; 110) which extends into the base part and which is provided with an upper closure cap, the metal sleeve being connected to the base part in a medium-tight manner.

2. The container according to claim 1, wherein the primary heat transfer element is integrally formed from aluminum.

3. The container according to claim 1 or 2, wherein the cover part (4) contains at least one medium-tightly closed compartment (48a, 48b) for separate storage of one component of the hot meal, wherein a segment (50a, 50b) of the compartment facing the chamber (50a, 50b) can be removed from the outside in order to bring the stored component into the chamber.

4. The container according to claim 1 or 2, further comprising a secondary heat transfer element (120) extending substantially parallel to the metal sleeve (110) and spaced apart therefrom, which secondary heat transfer element is thermally connected with the metal sleeve at least in a region near the base by means of a tertiary heat transfer element.

5. The container according to claim 4, wherein the secondary heat transfer element comprises two heat conducting plates (120) preferably formed from a metal sheet that are arranged substantially parallel to each other.

6. The container according to claim 5, wherein the said heat conducting plates divide the chamber of the container into three sub-chambers (A, B, A') that are medium-tightly separated from each other.

7. The container according to claim 6, wherein edge zones of the heat conducting plates (120) are received in corresponding grooves (122, 124) of the base and cover part.

8. The container according to claim 7, further comprising a scraper part arranged between the base part and the cover part, which scraper part is provided with a through hole (128) for the metal sleeve (110) and with through slots (130) for the heat conducting plates (120).

9. The container according to claim 8, wherein there is a first plug-in connection having a first releasing force F1 between the heat conducting plates (120) and the base part (102), the first releasing force F1 being larger than a second releasing force prevailing between the heat conducting plates (120) and the cover part (104).

10. The container according to claim 9, wherein the heat conducting plates (120) are provided with protrusions (132) that form a stop against the side of the scraper part (126) facing the cover part, and wherein there is a further plug-in connection with a third releasing force F3 between the scraper part (126) and the cover part (104), third releasing force being smaller than the first releasing force F1.

11. The container according to one of claims 1 to 10, wherein the base part is provided at an outer side thereof with:
i) at least one identification means (20; 136) for a corresponding releasing means (44) of an associated heating station; and/or
ii) at least one attaching means (20, 22; 136) for attaching to a corresponding coupling means (44, 32) of an associated heating station (26; 26a).

12. The container according to claim 11, wherein the identification means and/or the attaching means are formed as a locking projection (20; 136) for insertion into a correspondingly formed locking recess (44) acting as a releasing means and/or as coupling means, or vice versa.

13. A heating station for a container according to one of claims 1 to 12 comprising a base part (28) and a supporting face (32) configured for supporting the base part of the container (30), and with a rod-like heating element (34) extendable from the supporting face and having external dimensions corresponding to internal dimensions of the metal sleeve (10) of the container, wherein the heating station further comprises heating controlling means for effecting a controlled heating of the metal sleeve in an extended state of the heating element.

14. The heating station according to claim 13, wherein the rod-like heating element (34a) is rigidly arranged against the base part (28a) and wherein the supporting face (32a) is slidable in an axial direction of the heating station from an upper position to a lower position, the upper position of the supporting face defining the retracted state of the heating element and the lower position of the supporting face defining the extended state of the heating element, wherein spring means (40) are provided in order to bias the supporting face into the upper position, and wherein retaining means (20, 44) are provided in order to retain the supporting face in the lower position.

15. The heating station according to claim 13 or 14 for a container according to claim 11, wherein the heating controlling means cooperate with a releasing means (44) which exclusively unlocks a heating process only when an associated identification means (20) of a container is present.

## Revendications

1. Récipient permettant une alimentation chaude rapide comprenant une partie de fond (2 ; 102) et une partie de couvercle (4 ; 104) positionnée sur celle-ci, ces parties coopérant pour former une cavité (6 ; 106) étanche au milieu pour une part d'aliment devant être chauffée, et au moins la partie de base étant réalisée en un matériau synthétique thermoplastique,
**caractérisé en ce que**
la partie de fond comporte un élément de transfert de chaleur primaire (8 ; 108) pénétrant dans la cavité creux qui renferme un manchon métallique (10 ; 110) enfiché dans la partie de fond et équipé d'une calotte de fermeture supérieure, qui est relié de façon étanche au milieu avec la partie de base.

2. Récipient conforme à la revendication 1,
dans lequel l'élément de transfert de chaleur primaire est réalisé en une seule pièce en aluminium.

3. Récipient conforme à la revendication 1 ou 2,
dans lequel la partie de couvercle (4) comprend au moins un compartiment fermé (48a, 48b) étanche au milieu destiné à la conservation d'un composant de l'alimentation chaude, une zone (50a, 50b) tournée vers la cavité de ce compartiment pouvant être enlevée de l'extérieur de façon à transférer le composant conservé dans la cavité.

4. Récipient conforme à la revendication 1 ou 2,
comprenant en outre un élément de transfert de chaleur secondaire (120) s'étendant essentiellement parallèlement au manchon métallique (110) et situé à distance de ce manchon, qui est relié thermiquement au manchon métallique au moins dans une zone proche du fond par l'intermédiaire d'un élément de transfert de chaleur tertiaire.

5. Récipient conforme à la revendication 4,
dans lequel l'élément de transfert de chaleur secondaire comprend deux plaques thermiquement conductrices (120) de préférence réalisées en une tôle métallique qui sont essentiellement parallèles.

6. Récipient conforme à la revendication 5,
dans lequel les plaques thermiquement conductrices subdivisent la cavité du récipient en trois chambres partielles (A, B, A') étanches au milieu séparées les unes des autres.

7. Récipient conforme à la revendication 6,
dans lequel des zones de bord des plaques thermiquement conductrices (120) sont logées dans les rainures (122, 124) correspondantes de la partie de fond et de la partie de couvercle.

8. Récipient conforme à la revendication 7,
comprenant en outre une partie de racle (126) montée entre la partie de fond et la partie de couvercle qui est équipée d'une ouverture de passage (128) du manchon métallique (110) et de fentes de passage (130) des plaques thermiquement conductrices (120).

9. Récipient conforme à la revendication 8,
dans lequel entre les plaques thermiquement conductrices (120) et la partie de fond (102) il y a une première liaison par enfichage ayant une première force de détachement F1, cette première force de détachement F1 étant supérieure à une seconde force de détachement F2 existant entre les plaques thermiquement conductrices (120) et la partie de couvercle (104).

10. Récipient conforme à la revendication 9,
dans lequel les plaques thermiquement conductrices (120) sont équipées de saillies (132) qui forment une butée pour le côté de la partie de racle (126) tournée vers la partie de couvercle, et entre la partie de racle (126) et la partie de couvercle (104) il y a une autre liaison par enfichage ayant une troisième force de détachement F3 qui est inférieure à la première force de détachement F1.

11. Récipient conforme à l'une des revendications 1 à 10,
dans lequel la partie de fond est équipée extérieurement :
i. d'au moins un élément d'identification (20, 136) pour un moyen de déblocage (44) correspondant d'un poste de chauffage associé et/ou
ii. d'au moins un moyen de fixation (20, 22, 136) pour permettre sa fixation à un moyen d'accouplement correspondant (44, 32) d'un poste de chauffage (26, 26a) associé.

12. Récipient conforme à la revendication 11,
dans lequel le moyen d'identification et/ou le moyen de fixation est réalisé sous la forme d'une saillie d'encliquetage (20, 136) pour permettre son introduction dans un évidement d'encliquetage (44) de forme correspondante faisant office de moyen de déblocage et/ou de moyen d'accouplement, ou vice versa.

13. Poste de chauffage destiné à un récipient conforme à l'une des revendications 1 à 12,
comprenant une partie de base (28) et une surface d'appui (32) réalisée pour permettre de supporter la partie de fond du récipient (30) ainsi qu'un élément chauffant (34) en forme de barre pouvant être sorti de la surface d'appui et dont les dimensions externes correspondent aux dimensions internes du manchon métallique (10) du récipient, le poste de chauffage comprenant en outre des moyens de commande de chauffage pour permettre d'effectuer lorsque l'élément chauffant est déployé un chauffage contrôlé du manchon métallique.

14. Poste de chauffage conforme à la revendication 13,
dans lequel l'élément chauffant en forme de barre (34a) est monté rigidement par rapport à la partie de base (28a) et la surface d'appui (32a) peut être déplacée par coulissement en va et vient dans la direction axiale du poste de chauffage entre une position haute et une position basse, la position haute de la surface d'appui définissant l'état rétracté de l'élément chauffant et la position basse de la surface d'appui définissant l'état déployé de l'élément chauffant, des moyens élastiques (40) étant prévus pour précontraindre la surface d'appui dans la position haute et des moyens de retenue (20, 44) étant prévus pour maintenir la surface de pose dans la position basse.

15. Poste de chauffage conforme à la revendication 13 ou 14, destiné à un récipient conforme à la revendication 11,
dans lequel les moyens de commande du chauffage coopèrent avec un moyen de déblocage (44) qui libère un processus de chauffage exclusivement en présence d'un moyen d'identification associé (20) d'un récipient.
